# EUROPÄISCHE PATENTSCHRIFT

(11) **EP 1 086 993 B1**
(45) Veröffentlichungstag und Bekanntmachung des Hinweises auf die Patenterteilung: **19.03.2003**
(21) Anmeldenummer: 00810850.8
(22) Anmeldetag: 19.09.2000
(51) Int. Cl.: C09B 43/40, C09B 62/515, C09B 69/04, C09D 11/02

(54) **Kupferkomplexazofarbstoffe, deren Herstellung und deren Verwendung**
Copper complexes of azo dyestuffs, their production and use
Complexes de cuivre de colorants azoiques, leur préparation et leur utilisation

(30) Priorität: 27.09.1999 CH 176299
(43) Veröffentlichungstag der Anmeldung: 28.03.2001
(73) Patentinhaber: Ciba Specialty Chemicals Holding Inc., 4057 Basel (CH)
(72) Erfinder: Lehmann, Urs, 4057 Basel (CH); Frick, Marcel, 4153 Reinach (CH)

(56) Entgegenhaltungen:
- EP-A- 0 277 624
- EP-A- 0 312 004
- DE-B- 1 103 886
- PATENT ABSTRACTS OF JAPAN vol. 014, no. 544 (C-0784), 4. Dezember 1990 (1990-12-04) -& JP 02 232274 A (CANON INC), 14. September 1990 (1990-09-14)

## Beschreibung

Die vorliegende Erfindung betrifft neue Magenta-Farbstoffe, die sich aus reaktiven Kupferkomplexazofarbstoffen durch Addition bzw. Substitution von bestimmten stickstoffhaltigen nukleophilen Verbindungen erhalten lassen. Die vorliegende Erfindung betrifft ferner die Herstellung dieser Farbstoffe und Tinten, enthaltend die erfindungsgemässen Farbstoffe.

Die der vorliegenden Erfindung zugrundeliegenden Farbstoffe eignen sich insbesondere zum Bedrucken von Papier, textilen Fasermaterialien, Kunststoff- oder Aluminium-Folien, vorzugsweise nach dem Tintenstrahldruckverfahren, sowie zum Färben von textilen Fasermaterialien, Holz, Papier, Aluminium-Blechen oder Aluminium-Folien nach traditionellen Färbe- und Druckverfahren und ergeben Magenta-Färbungen mit guten Lichtechtheiten und hoher Farbbrillanz, deren Nuance deutlich in den Blaubereich verschoben ist.

Die europäische Patentanmeldung EP-0277624-A2 beschreibt wasserlösliche, faserreaktive Farbstoffzusammensetzungen, welche sich unter anderem von Chromophoren von Mono-oder Disazofarbstoffen ableiten, welche durch Vinylsulfon- oder Sulfatoethylsulfongruppen substituiert sein können.

Die europäische Patentanmeldung EP-0312004-A2 offenbart die Verwendung von wasserlöslichen Farbstoffen zum Färben von Aufzeichnungsflüssigkeiten, dadurch gekennzeichnet, daß den Farbstoffen in Form der freien Säure die allgemeine Formel (I) zukommt,

A-(SO₂-X)ₚ (I)

worin A für einen üblichen farbgebenden und mindestens eine Sulfonsäuregruppe tragenden Rest aus der Klasse der Mono-oder Disazofarbstoffe oder deren Komplexe mit Chrom, Eisen, Kobalt oder Kupfer, der Kupfer- oder Nickel-Phthalocyanine, Anthrachinone, Dioxazine oder Kupfer-Formazan-Komplexe steht, p 1, 2, 3 oder 4 ist und X für eine Vinylgruppe oder für eine entsprechend substituierte Ethylgruppe steht.

An Tintenzusammensetzungen, insbesondere für die Verwendung im Mehrfarbendruck, werden heute hohe Anforderungen gestellt. So ist es beispielsweise von erheblicher Bedeutung, dass die den Tinten zugrundeliegenden Farbstoffe möglichst genau den drei Primärfarben Gelb, Cyan und Magenta entsprechen. Dabei wird die Auswahl der geeigneten Farbstoffe nicht nur durch die Reinheit des Farbtons und die gewünschte Brillanz der Farbwiedergabe, sondern auch durch die benötigte Nuance eingeschränkt.

Der vorliegenden Erfindung liegt daher die Aufgabe zugrunde, neue, verbesserte Magenta-Farbstoffe für das Färben und Bedrucken von Papier, textilen Fasermaterialien, Kunststoffoder Aluminium-Folien, vorzugsweise nach dem Tintenstrahldruckverfahren, zu finden, welche reine und brillante Farbtöne mit deutlich blaustichig roter Nuance ergeben und sich gleichzeitig durch eine gute Lichtechtheit auszeichnen.

Es wurde nun überraschend gefunden, dass bestimmte Derivate von C.I. Reactive Red 23 bei guter Lichtechtheit ein sehr brillantes und blaustichiges Magenta ergeben.

Gegenstand der vorliegenden Erfindung sind somit
Farbstoffe der Formel (1) 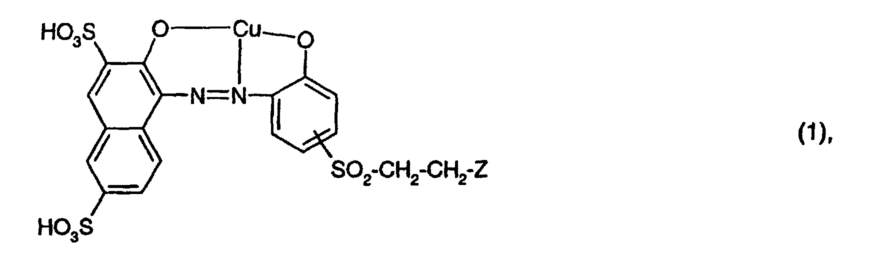 worin
Z C₁₀-C₂₀-Terpenamino oder gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono-C₁-C₁₆-Alkylamino oder N,N-Di-C₁-C₁₆-Alkylamino bedeutet.

Z als N-Mono- oder N,N-Di-C₁-C₁₆-Alkylamino bedeutet beispielsweise Methylamino, Ethylamino, N,N-Di-Methylamino, N,N-Di-Ethylamino, Isopropylamino, n-Butylamino, sek.-Butylamino, Isobutylamino oder tert.-Butylamino, lineares oder verzweigtes Pentylamino, Hexylamino, Heptylamino, Octylamino, Nonylamino, Decylamino, Undecylamino, Dodecylamino, Tridecylamino oder Tetradecylamino. Die genannten Reste sind unsubstituiert oder im Alkylteil substituiert, z.B. durch Phenyl, welches seinerseits durch Carboxy, Carbamoyl, Sulfo oder Sulfamoyl substituiert sein kann; Amino; C₂-C₄-Alkanoylamino, wie beispielsweise Acetylamino oder Propionylamino; Hydroxy; Sulfo; Sulfato; Carboxy; Carbamoyl oder Sulfamoyl. Die genannten Reste sind gegebenenfalls im Alkylteil durch ein bis drei Sauerstoffatome oder -NH- Gruppen unterbrochen.

Als Beispiele für die im Alkylteil substituierten und die gegebenenfalls durch Sauerstoff oder -NH- im Alkylteil unterbrochenen Reste seien
N-β-Aminoethylamino, N-β-Aminopropylamino, N-β-Hydroxyethylamino, N,N-Di-β-Hydroxyethylamino, N-2-(β-Hydroxyethoxy)ethylamino, N-2-[2-(β-Hydroxyethoxy)ethoxy]-ethylamino, N-2-(β-Hydroxyethytemino)ethyl-N-(β-hydroxyethyl)amino, N-2-(β-Aminoethylamino)ethylamino, N-β-Sulfatoethylamino, N-β-Sulfoethylamino, N-Carboxymethylamino, N-Methyl-N-carboxymethylamino, N,N-Di-Carboxymethylamino, N-α-Carboxyethylamino, N-β-Carboxyethylamino, N-α,β-Dicarboxyethylamino, N-α-Carboxy-γ-Carbamoylpropylamino. N-α-Carboxy-β-hydroxyethylamino, N-α-Carboxy-β-phenylethylamino, N-α,γ-Dicarboxypropylamino, N-Ethyl-N-β-hydroxyethylamino und N-Methyl-N-β-hydroxy-ethylamino, insbesondere
N,N-Di-β-Hydroxyethylamino, N-2-(β-Hydroxyethylamino)ethyl-N-(β-hydroxyethyl)amino, N-Carboxymethylamino, N-Methyl-N-carboxymethylamino, N,N-Di-Carboxymethylamino,
N-α-Carboxyethylamino, N-β-Carboxyethylamino, N-α,β-Dicarboxyethylamino, N-α-Carboxy-γ-Carbamoylpropylamino, N-α-Carboxy-β-hydroxyethylamino, N-α-Carboxy-β-phenylethylamino und N-α,γ-Dicarboxypropylamino genannt.
Geeignete unsubstituierte und ununterbrochene Reste sind vorzugsweise N-Mono-C₈-C₁₄-Alkylamino- und insbesondere N-Mono-C₁₁-C₁₄-Alkylaminoreste, wie die im Alkylteil verzweigten Reste, die z.B. der Formel 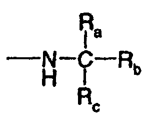 entsprechen, wobei die Summe der Kohlenstoffatome Rₐ + R_{b} + R_{c} 11 bis 14 beträgt. Beispielhaft für die dem Rest der vorbezeichneten Formel zugrundeliegenden Amine sei ®Primene 81 R (Rohm & Haas) genannt.

Z als N-Mono- oder N,N-Di-C₁-C₁₆-Alkylamino, welches im Alkylteil substituiert und gegebenenfalls durch Sauerstoff oder -NH- unterbrochen ist, ist vorzugsweise N-Mono- oder N,N-Di-C₁-C₆-Alkylamino und insbesondere N-Mono- oder N,N-Di-C₁-C₄-Alkylamino.

Bevorzugt sind die im Alkylteil substituierten und gegebenenfalls durch Sauerstoff oder -NHunterbrochenen Reste.

Z als C₁₀-C₂₀-Terpenamino, vorzugsweise C₂₀-Diterpenamino, ist eine am Stickstoff durch einen Terpenkohlenwasserstoffrest monosubstituierte Aminogruppe. Als Terpenkohlenwasserstoffrest kommen z.B. acyclische-, monocyclische- oder bicyclische C₁₀-Terpene, acyclische-, monocyclische-, bicyclische- oder tricyclische C₁₅-Sesquiterpene, acyclische-, monocyclische- oder tricyclische C₂₀-Diterpene, insbesondere tricyclische C₂₀-Diterpene und ganz besonders dehydrierte tricyclische C₂₀-Diterpene, etwa solche, die sich von der Dehydroabietinsäure ableiten. Beispielhaft für einen solchen dehydrierten tricyclischen C₂₀-Diterpenaminorest, sei der Rest der Formel 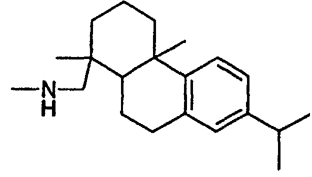 genannt.

Bevorzugt sind die erfindungsgemässen Farbstoffe, worin
Z C₂₀-Diterpenamino, N-Mono-C₈-C₁₄-Alkylamino oder im Alkylteil durch Phenyl, welches seinerseits durch Carboxy substituiert sein kann, Amino, Hydroxy, Sulfo, Sulfato, Carboxy oder Carbamoyl substituiertes und gegebenenfalls durch ein oder zwei Sauerstoffatome oder -NH- Gruppen unterbrochenes N-Mono-C₁-C₆-Alkylamino oder N,N-Di-C₁-C₆-Alkylamino bedeutet.

Besonders bevorzugt sind die erfindungsgemässen Farbstoffe, worin
Z C₂₀-Diterpenamino, N-Mono-C₁₁-C₁₄-Alkylamino oder im Alkylteil durch Phenyl, welches seinerseits durch Carboxy substituiert sein kann, Hydroxy, Sulfo, Sulfato, Carboxy oder Carbamoyl substituiertes und gegebenenfalls durch ein oder zwei Sauerstoffatome oder-NH- Gruppen unterbrochenes N-Mono-C₁-C₆-Alkylamino oder N,N-Di-C₁-C₆-Alkylamino bedeutet.

Ganz besonders bevorzugt sind die erfindungsgemässen Farbstoffe, worin
Z im Alkylteil durch Phenyl, Hydroxy, Carboxy oder Carbamoyl substituiertes und gegebenenfalls durch Sauerstoff oder -NH- unterbrochenes N-Mono-C₁-C₄-Alkylamino oder N,N-Di-C₁-C₄-Alkylamino bedeutet.

In einer bevorzugten Ausführungsform der erfindungsgemässen Farbstoffe entspricht der Farbstoff der Formel (1) einem Farbstoff der Formel (2) 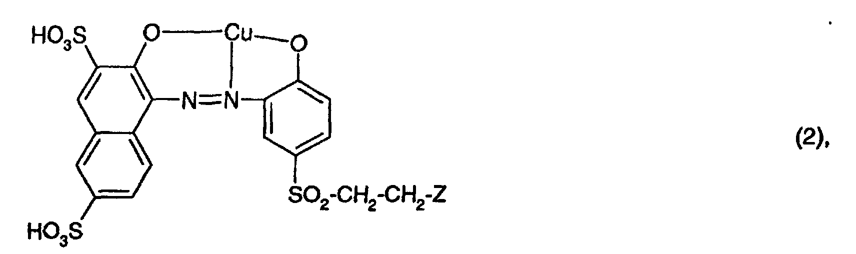 worin
Z die oben angegebene Bedeutung und Bevorzugung hat.

Besonders bevorzugt sind die erfindungsgemässen Farbstoffe, worin
der Farbstoff der Formel (1) ein Farbstoff der Formel (2) ist, und
Z im Alkylteil durch Phenyl, Hydroxy, Carboxy oder Carbamoyl, vorzugsweise Hydroxy, Carboxy oder Carbamoyl, substituiertes und gegebenenfalls durch Sauerstoff oder -NHunterbrochenes N-Mono-C₁-C₄-Alkylamino oder N,N-Di-C₁-C₄-Alkylamino bedeutet.

Ganz besonders bevorzugt sind die erfindungsgemässen Farbstoffe, worin
der Farbstoff der Formel (1) ein Farbstoff der Formel (2) ist, und
Z N,N-Di-β-Hydroxyethylamino, N-2-(β-Hydroxyethylamino)ethyl-N-(β-hydroxyethyl)amino, N-Carboxymethylamino, N-Methyl-N-carboxymethylamino, N,N-Di-Carboxymethylamino,
N-α-Carboxyethylamino, N-β-Carboxyethylamino, N-α,β-Dicarboxyethylamino, N-α-Carboxy-γ-Carbamoylpropylamino, N-α-Carboxy-β-hydroxyethylamino, N-α-Carboxy-β-phenylethylamino oder N-α,γ-Dicarboxypropylamino bedeutet.

Gegenstand der vorliegenden Erfindung ist ferner ein Verfahren zur Herstellung von Farbstoffen der Formel (1), dadurch gekennzeichnet, dass man
eine Verbindung der Formel (3) 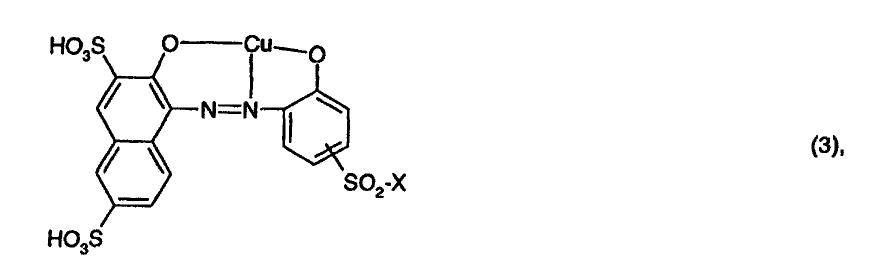 worin X Vinyl oder -CH₂-CH₂-U und U eine alkalisch abspaltbare Gruppe bedeutet, mit mindestens einer äquimolaren Menge einer Verbindung der Formel (4)

Z-H (4)

umsetzt, wobei für Z die oben angegebene Bedeutung und Bevorzugung gilt.

Als alkalisch abspaltbare Gruppe U kommt z.B. -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ in Betracht. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Die Verbindungen der Formeln (3) und (4) sind bekannt oder lassen sich nach an sich bekannten Verfahren herstellen. Eine Verbindung der Formel (3) ist z.B. C.I. Reactive Red 23.

Zweckmässigerweise verwendet man einen Überschuss der Verbindung der Formel (4) beispielsweise einen 1,2 bis 20 molaren, vorzugsweise 1,5 bis 10 molaren, Überschuss.

Die Reaktion wird zweckmässigerweise in Gegenwart einer Base, z.B. einem Alkalihydroxid, Alkalialkoholat oder Benzyltrimethylammoniumhydroxid, vorzugsweise einem Alkalihydroxid, z.B. Natriumhydroxid oder Kaliumhydroxid, oder einer Säure, z.B. Schwefelsäure, Eisessig oder Bortrifluorid, vorzugsweise einer Base, durchgeführt.

Einige aliphatische Amine der Formel (4) sind hinreichend basisch, um unter milden Bedingungen, teilweise auch ohne die Gegenwart einer Base oder Säure, addiert zu werden. Die Reaktionsbedingungen richten sich dabei insbesondere nach der Nukleophilie der Verbindung der Formel (4). Die Umsetzung wird zweckmässigerweise bei Temperaturen von 10 bis 100°C, vorzugsweise 15 bis 75°C und insbesondere 20 bis 50°C, durchgeführt. Diese Abhängigkeiten sind allgemein bekannt und in der Literatur hinreichend beschrieben.

Die Sulfogruppen in den erfindungsgemässen Farbstoffen liegen entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz oder als Salz der Amine Z-H der Formel (4) vor, die zur Herstellung der erfindungsgemässen Farbstoffe geeignet sind. Hierbei gilt in entsprechender Weise die oben für den Aminrest Z angegebene Bedeutung und Bevorzugung. Besonders hevorgehoben seien die Salze des Amins der Formel 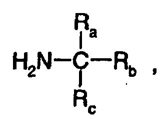 wobei die Summe der Kohlenstoffatome Rₐ + R_{b} + R_{c} 11 bis 14 beträgt (z.B. ®Primene 81 R der Firma Rohm & Haas), die sich insbesondere zum Bedrucken von Aluminium-Blechen oder Folien eignen.

Gegenstand der vorliegenden Erfindung sind somit auch die Farbstoffe der Formel (1), worin Z eine alkalisch abspaltbare Gruppe, C₁₀-C₂₀-Terpenamino oder gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono-C₁-C₁₆-Alkylamino oder N,N-Di-C₁-C₁₆-Alkylamino bedeutet, als Salz eines Amins der Formel 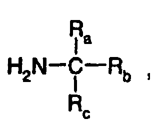 wobei die Summe der Kohlenstoffatome Rₐ + R_{b} + R_{c} 11 bis 14 beträgt.

Für Z als alkalisch abspaltbare Gruppe gilt die oben für U angegebene Bedeutung und Bevorzugung. Ferner gilt für Z die oben unter Formel (1) angegebene Bedeutung und Bevorzugung.

Gegenstand der vorliegenden Erfindung sind weiterhin Tinten, z.B. wässrige Tinten, enthaltend einen Farbstoff der Formel (1), wobei für Z die oben angegebene Bedeutung und Bevorzugung gilt.

Die in den Tinten verwendeten Farbstoffe sollten vorzugsweise salzarm sein, d.h. einen Gesamtgehalt an Salzen von weniger als 0,5 Gew.-%, bezogen auf das Gewicht der Farbstoffe, enthalten. Farbstoffe, die, bedingt durch ihre Herstellung und/oder die nachträgliche Zugabe von Coupagemitteln grössere Salzgehalte aufweisen, können z.B. durch Membrantrennverfahren, wie Ultrafiltration, Umkehrosmose oder Dialyse, entsalzt werden.

Die Tinten enthalten bevorzugt einen Gesamtgehalt an Farbstoffen von 1 bis 35 Gew.-%, insbesondere 1 bis 30 Gew.-% und vorzugsweise 1 bis 20 Gew.-%, bezogen auf das Gesamtgewicht der Tinte. Als untere Grenze ist hierbei eine Grenze von 1,5 Gew.-%, vorzugsweise 2 Gew.-% und insbesondere 3 Gew.-%, bevorzugt.

Die Tinten können organische Lösungsmittel, z.B. mit Wasser mischbare organische Lösungsmittel, enthalten, beispielsweise C₁-C₄-Alkohole, wie z.B. Methanol, Ethanol, n-Propanol, Isopropanol, n-Butanol, sec.-Butanol, tert.-Butanol oder Isobutanol; Amide, wie z.B. Dimethylformamid oder Dimethylacetamid; Ketone oder Ketonalkohole, wie z.B. Aceton, Methylisobutylketon, Diacetonalkohol; Ether wie z.B. Tetrahydrofuran oder Dioxan; Stickstoff enthaltende heterocyclische Verbindungen, wie z.B. N-Methyl-2-pyrrolidon oder 1,3-Dimethyl-2-imidazolidon, Polyalkylenglykole, wie z.B. Polyethylenglykol oder Polypropylenglykol; C₂-C₆-Alkylenglykole und Thioglykole, wie z.B. Ethylenglykol, Propylenglykol, Butylenglykol, 1,5-Pentandiol, Thiodiglykol, Hexylenglykol, Diethylenglykol, Triethylenglykol, Tetraethylenglykol oder Diethylenglykolmonobutylether; weitere Polyole, wie z.B. Glycerin, oder 1,2,6-Hexantriol; und C₁-C₄-Alkylether von mehrwertigen Alkoholen, wie z.B. 2-Methoxyethanol, 1-Methoxypropanol, 2-(2-Methoxyethoxy)ethanol, 2-(2-Ethoxyethoxy)-ethanol, 2-[2-(2-Methoxyethoxy)ethoxy]-ethanol oder 2-[2-(2-Ethoxyethoxy)ethoxy]ethanol; bevorzugt N-Methyl-2-pyrrolidon, Diethylenglykol, Glycerin oder insbesondere 1,2-Propylenglykol, üblicherweise in einer Menge von 2 bis 30 Gew.-%, insbesondere 5 bis 30 Gew.-% und vorzugsweise 10 bis 25 Gew.-%, bezogen auf das Gesamtgewicht der Tinte.

Weiterhin können die Tinten noch Lösungsvermittler, wie z.B. ε-Caprolactam, enthalten.

Die Tinten können, u.a. zwecks Einstellung der Viskosität, Verdickungsmittel natürlicher oder synthetischer Herkunft enthalten.

Als Beispiele für Verdickungsmittel seien handelsübliche Alginatverdickungen, Stärkeether oder Johannisbrotkernmehlether, insbesondere Natriumalginat für sich allein oder im Gemisch mit modifizierter Cellulose, wie z.B. Methyl-, Ethyl-, Carboxymethyl-, Hydroxyethyl-, Methylhydroxyethyl-, Hydroxypropyl- oder Hydroxypropylmethylcellulose, insbesondere mit vorzugsweise 20 bis 25 Gewichtsprozent Carboxymethylcellulose, genannt. Als synthetische Verdickungsmittel seien ferner z.B. solche auf Basis von Poly(meth)acrylsäuren oder Poly(meth)acrylamiden genannt.

Die Tinten enthalten solche Verdickungsmittel z.B. in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte.

Ferner können die Tinten Puffersubstanzen enthalten, wie z.B. Borax, Borat, Phosphat, Polyphosphat oder Citrat. Als Beispiele seien Borax, Natriumborat, Natriumtetraborat, Natriumdihydrogenphosphat, Dinatriumhydrogenphosphat, Natriumtripolyphosphat, Natriumpentapolyphosphat sowie Natriumcitrat genannt. Sie werden insbesondere in Mengen von 0,1 bis 3 Gew.-%, vorzugsweise 0,1 bis 1 Gew.-%, bezogen auf das Gesamtgewicht der Tinte, verwendet, um einen pH-Wert von z.B. 4 bis 9, insbesondere 5 bis 8,5, einzustellen.

Als weitere Zusätze können die Tinten Tenside oder Feuchthaltemittel enthalten.

Als Tenside kommen die handelsüblichen anionischen oder nichtionogenen Tenside in Betracht. Als Feuchthaltemittel kommen z.B. Harnstoff oder eine Mischung von Na-Lactat (vorteilhafterweise in Form einer 50 bis 60%-igen wässrigen Lösung) und Glycerin und/oder Propylenglykol in Mengen von vorzugsweise 0,1 bis 30 Gew.-%, insbesondere 2 bis 30 Gew.-%, in den erfindungsgemässen Tinten in Betracht.

Bevorzugt sind Tinten, welche eine Viskosität von 1 bis 40 mPa·s, insbesondere 1 bis 20 mPa·s und vorzugsweise 1 bis 10 mPa·s aufweisen.

Weiterhin können die Tinten noch übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Die Tinten können in üblicher Weise durch Mischen der einzelnen Bestandteile, z.B. in der gewünschten Menge Wasser, hergestellt werden.

Die erfindungsgemässen Tinten sind insbesondere für die Verwendung in Aufzeichnungssystemen solcher Art geeignet, bei welchen eine Tinte aus einer kleinen Öffnung in Form von Tröpfchen ausgepresst wird, welche gegen ein Substrat gerichtet werden, auf welchem ein Bild entsteht. Geeignete Substrate sind z.B. textile Fasermaterialien, Papier, Kunststoff oder Aluminium-Folien. Geeignete Aufzeichnungssysteme sind z.B. handelsübliche Tintenstrahldrucker für die Anwendung im Papier- oder Textildruck, oder Schreibgeräte wie Füllfederhalter oder Kugelschreiber und insbesondere Tintenstrahldrucker.

Je nach Art der Verwendung ist es gegebenenfalls erforderlich z.B. die Viskosität oder andere physikalische Eigenschaften der Tinte, Insbesondere solche, die einen Einfluss auf die Affinität zum jeweiligen Substrat haben, entsprechend anzupassen. Für das Bedrucken von textilen Fasermaterialien, Papier oder Kunststoff-Folien werden vorzugsweise wässrige Tinten verwendet.

Als Beispiele für Papier, das mit den erfindungsgemässen Tinten bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Paper, Epson Glossy Film, HP Special Ink-Jet Paper, Encad Photo Gloss Paper, llford Photo Paper genannt. Kunststoff-Folien, die mit den erfindungsgemässen Tinten bedruckt werden können sind beispielsweise transparent oder milchig/undurchsichtig. Geeignete Kunststoff-Folien sind z.B. 3M Transparency-Film. Bevorzugt ist Glanzpapier, wie z.B. Epson Glossy Paper.

Als textile Fasermaterialien kommen insbesondere stickstoffhaltige oder hydroxygruppenhaltige Fasermaterialien, wie z.B. textile Fasermaterialien aus Cellulose, Seide, Wolle oder synthetischen Polyamiden, in Betracht.

Beispiele für Aluminium-Folien sind oberflächenbehandelte Folien, z.B. vinyl-lackierte Aluminium-Folien.

Gegenstand der vorliegenden Erfindung ist somit auch ein Verfahren zum Bedrucken von textilen Fasermaterialien, Papier, Kunststoff oder Aluminium-Folien, insbesondere nach dem Tintenstrahldruck-Verfahren, dadurch gekennzeichnet, dass man eine Tinte verwendet, die einen Farbstoff der Formel (1) enthält, wobei für Z die oben angegebene Bedeutung und Bevorzugung gilt

Bevorzugt sind Tintenstrahldruck-Verfahren zum Bedrucken von textilen Fasermaterialien, Papier oder Kunststoff-Folien, worin man eine wässrige Tinte verwendet.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck mittels eines Piezo-Inkjet-Kopfes. Bevorzugt ist für das erfindungsgemässe Verfahren ferner der Druck nach der kontinuierlichen Ink-Jet-Methode.

Die erfindungsgemässen Tinten eignen sich insbesondere als Magenta-Komponente für den Mehrfarbendruck.

Die hergestellten Drucke zeichnen sich insbesondere durch gute Lichtechtheiten und eine hohe Farbbrillanz aus.

Die erfindungsgemässen Farbstoffe eignen sich weiterhin zum Färben und Bedrucken von hydroxylgruppenhaltigen und stickstoffhaltigen Fasermaterialien, Papier und Aluminium-Blechen oder Aluminium-Folien nach an sich bekannten Methoden, wie beispielsweise Tauchverfahren, Rouleau- oder Filmdruck. Die erfindungsgemässen Farbstoffe eignen sich auch zum Färben oder Beizen von Holz.

Beispiele für Fasermaterialien sind Seide, Wolle, synthetische Polyamidfasern und Polyurethane sowie cellulosehaltige Fasermaterialien aller Art. Cellulosehaltige Fasermaterialien sind beispielsweise die natürliche Cellulosefaser, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Das oben genannte Textilmaterial kann in den verschiedensten Verarbeitungsformen vorliegen, wie z.B. als Faser, Garn, Gewebe oder Gewirke.

Beispiele für Aluminium-Bleche oder Folien sind oberflächenbehandelte Bleche oder Folien, z.B. vinyl-lackierte Aluminium-Bleche oder Folien.

Einen weiteren Gegenstand der vorliegenden Erfindung stellt somit die Verwendung der erfindungsgemässen Farbstoffe zum Färben oder Bedrucken von textilen Fasermaterialien, insbesondere hydroxylgruppenhaltigen oder stickstoffhaltigen Fasermaterialien, Holz, Papier, Aluminium-Blechen oder Aluminium-Folien dar.

Die erfindungsgemässen Farbstoffe können in allgemein üblicher, gegebenenfalls zuvor aufbereiteter Form zum Färben oder Bedrucken verwendet werden, beispielsweise in Form von wässrigen Farbstofflösungen für das Ausziehverfahren oder in Form von Druckpasten für die Verwendung im Schablonendruck.

Man erhält Färbungen und Drucke mit guten Allgemeinechtheiten, insbesondere guter Lichtechtheit und hoher Farbbrillanz. Färbungen und Drucke auf hydroxylgruppenhaltigen oder stickstoffhaltigen Fasermaterialien zeichnen sich ferner durch gute Reib-, Nass- und Nassreibechtheiten aus.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiet 1: Eine neutrale Lösung von 14,8 Teilen Asparaginsäure in 50 Teilen Wasser wird bei Raumtemperatur zu einer Lösung von 7,5 Teilen des Farbstoffs der Formel (101)

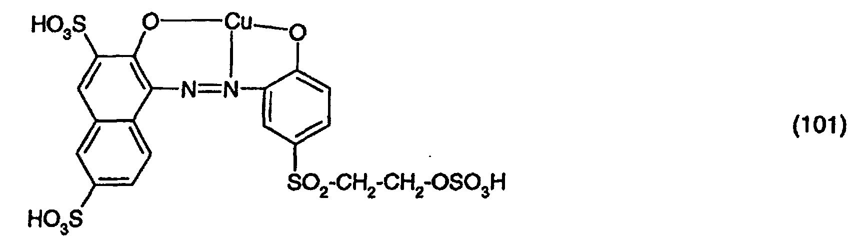

in 50 Teilen Wasser gegeben und der pH mit einer 15%igen Natriumhydroxydlösung auf 10 gestellt. Zur Vervollständigung der Reaktion wird einige Stunden unter diesen Bedingungen gerührt (Kontrolle durch Dünnschichtchromatographie). Anschliessend wird die Reaktionsmischung mit einer 16%igen Salzsäure auf pH 8 gestellt, klärfiltriert, dialytisch vom Salz befreit und gefriergetrocknet. Man erhält 5,2 Teile eines Farbstoffs, der in Form der freien Säure der Formel (102) 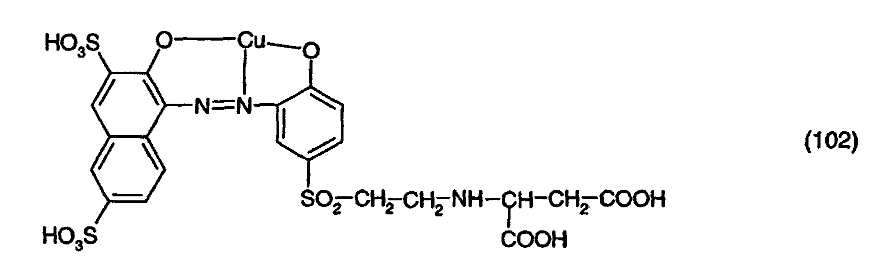 entspricht und Drucke oder Färbungen auf Wolle, Seide und Papier in einem klaren, deutlich blaustichigen magenta Farbton mit guter Lichtechtheit und hoher Farbbrillanz ergibt.

Beispiel 2: 6,7 Teile des Farbstoffs der Formel (101) werden in 100 Teilen Wasser bei Raumtemperatur gelöst und 1,52 Teile N-Methylglycin zugegeben. Der pH der erhaltenen Lösung wird mit einer 15%igen Natriumhydroxydlösung auf 10 gestellt und die Reaktionsmischung auf 50°C erwärmt. Zur Vervollständigung der Reaktion wird etwa eine Stunde unter diesen Bedingungen gerührt (Kontrolle durch Dünnschichtchromatographie). Anschliessend wird die Reaktionsmischung mit einer 16%igen Salzsäure auf pH 8 gestellt, klärfiltriert, dialytisch vom Salz befreit und gefriergetrocknet. Man erhält 6,3 Teile eines Farbstoffs, der in Form der freien Säure der Formel (103) 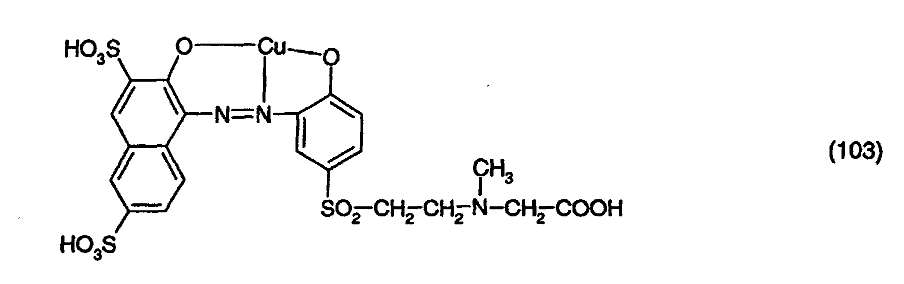 entspricht und Drucke oder Färbungen auf Wolle, Seide und Papier in einem klaren, deutlich blaustichigen magenta Farbton mit guter Lichtechtheit und hoher Farbbrillanz ergibt.

Beispiele 3 bis 12: Analog zu der in den Beispielen 1 oder 2 beschriebenen Vorgehensweise lassen sich die Farbstoffe der allgemeinen Formel 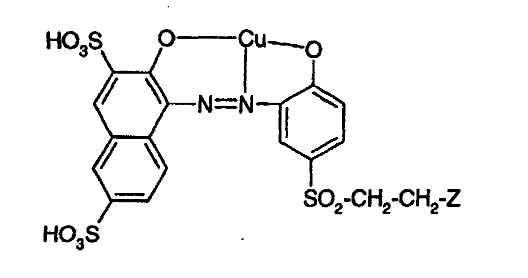 herstellen, worin Z jeweils die in Tabelle 1 genannte Bedeutung hat, wenn man anstelle von Asparaginsäure bzw. N-Methylglycin eine Verbindung der Formel Z-H verwendet:

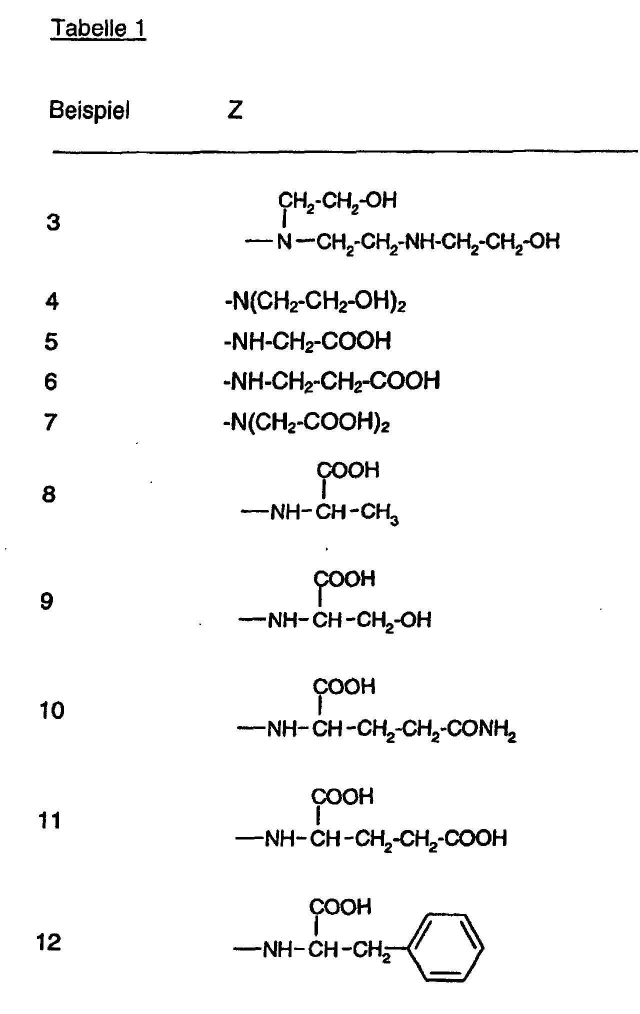

Die Farbstoffe ergeben Drucke sowie Färbungen auf Wolle, Seide und Papier in einem klaren, deutlich blaustichigen magenta Farbton mit guter Lichtechtheit und hoher Farbbrillanz.

Beispiel 13: Eine Lösung von 3,4 Teilen des Farbstoffs der Formel (101) in 90 Teilen Wasser wird durch Zugabe einer 2 N Natriumhydroxidlösung bei pH 10 und einer Temperatur von 0 bis 10°C vinyliert. Zu dieser Lösung werden bei 0 bis 5°C innerhalb einer guten Stunde 27,4 Teile einer wässrigen 0,6 molaren ®Primene 81 R-Lösung getropft und anschliessend die Temperatur sukzessive auf 80°C gesteigert, wobei der pH durch Zugabe einer 2 N Natriumhydroxidlösung bei 10 gehalten wird. Nach Beendigung der Reaktion (Kontrolle mittels Dünnschichtchromatographie) lässt man die Reaktionsmischung zunächst auf Raumtemperatur abkühlen, kühlt dann die Mischung weiter auf ca. 0°C ab und stellt den pH mit einer wässrigen Salzsäure (16%-ig) auf 6,5. Der ausgefallene Niederschlag wird mit Eiswasser gewaschen und anschliessend im Vakuum getrocknet. Man erhält 3,8 Teile eines Farbstoffs, der in der Salzform der Formel (104) 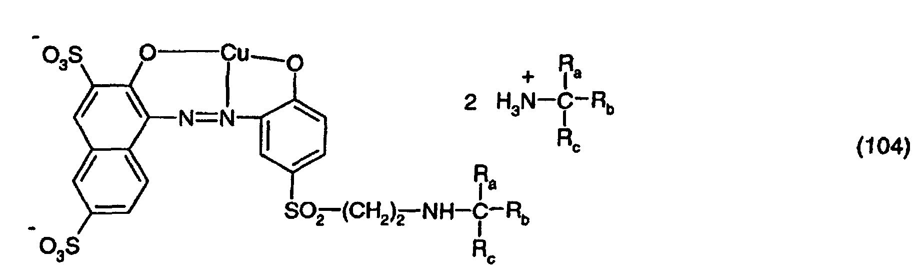 entspricht, worin die Summe der Kohlenstoffatome Rₐ + R_{b} + R_{c} 11 bis 14 beträgt. Der Farbstoff ergibt Drucke auf Aluminium-Blech oder Aluminium-Folie in einem klarem roten Farbton mit guter Lichtechtheit.

Beispiel 14: Eine Lösung von 3,4 Teilen des Farbstoffs der Formel (101) in 90 Teilen Wasser wird mit einer 1 N Natriumhydroxidlösung auf pH 4,5 gestellt. Zu dieser Lösung werden bei 0 bis 5°C innerhalb 1,5 Stunden 18,2 Teile einer wässrigen 0,6 molaren ®Primene 81 R-Lösung getropft. Die Reaktionsmischung wird über Nacht bei dieser Temperatur gerührt und anschliessend die flüssigen Anteile von der festen Reaktionsmasse abdekantiert. Der Rückstand wird wiederholt mit Wasser gewaschen, anschliessend in Ethanol gelöst, eingedampft und im Vakuum bei 40 bis 50°C getrocknet. Man erhält 3,4 Teile des Farbstoffs der Formel (101) als Triprimensalz 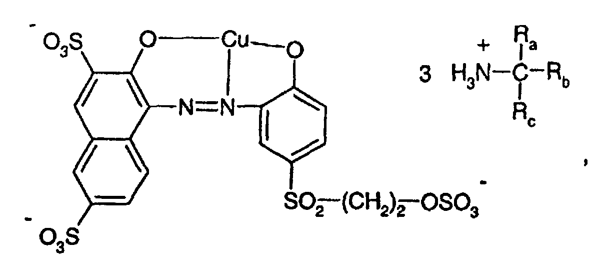 worin die Summe der Kohlenstoffatome Rₐ + R_{b} + R_{c} 11 bis 14 beträgt. Der Farbstoff ergibt Drucke auf Aluminium-Blech oder Aluminium-Folie in klarem roten Farbton mit guter Lichtechtheit.

### Applikationsbeispiel 1:

3,55 Teile des Farbstoffs gemäss Beispiel 1 werden in 100 Teilen destilliertem Wasser gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt.

### Applikationsbeispiel 2:

a) Ein Seidengewebe wird mit einer wässrigen Flotte, enthaltend 150 g/l eines handelsüblichen Alginatverdickers, 50 g/l Harnstoff und 50 g/l einer wässrigen Ammoniumtartratlösung (25 %-ig), foulardiert (Flottenaufnahme 90%) und getrocknet.
b) Auf das gemäss a) vorbehandelte Seidengewebe wird eine Tinte A, enhaltend
   5 Gew.% des Farbstoffs gemäss Beispiel 1,
   20 Gew.% 1,2-Propylenglykol und
   75 Gew.% Wasser
mit einem Drop-on-Demand Piezo Inkjet-Kopf aufgedruckt. Der Druck wird getrocknet und bei 102°C im Sattdampf fixiert und anschliessend ausgewaschen.

### Applikationsbeispiel 3:

a) Mercerisiertes Baumwoll-Satin wird mit einer Flotte, enthaltend 30 g/l Natriumcarbonat, foulardiert (Flottenaufnahme 70%) und getrocknet.
b) Auf das gemäss Schritt a) vorbehandelte Baumwoll-Satin wird eine wässrige Tinte mit einer Viskosität von 2 mPa.s, enthaltend
   - 15 Gew.-% des Farbstoffs gemäss Beispiel 1,
   - 15 Gew.-% 1,2-Propylenglykol,
   - 0,5 Gew.-% Borax und
   - 69,5 Gew.-% Wasser
mit einem Drop-on-Demand Inkjet-Kopf (Bubble Jet) aufgedruckt. Der Druck wird vollständig getrocknet und 4 Minuten bei 102°C im Sattdampf fixiert, kalt gespült, kochend ausgewaschen, nochmals gespült und getrocknet.

### Applikationsbeispiel 4:

a) Eine Drucktinte wird hergestellt aus:
8 Gew.% des Farbstoffs gemäss Beispiel 13,
8 Gew.% Nitrocellulose A 400,
6 Gew.% Keton Resin SK,
1 Gew.% Dibutylphthalat,
20 Gew.% 1-Methoxypropanol,
20 Gew.% Methylisobutylketon und
37 Gew.% Ethanol (abs.), indem man die Lösungsmittel miteinander mischt, dann die Harze und zuletzt den Farbstoff darin löst. Die Drucktinte wird mit einer Schablone auf vinyllackiertes Aluminium-Blech oder Aluminium-Folie gedruckt.

### Applikationsbeispiel 5:

10 Teile Wollstrickgarn werden bei 30°C in ein Färbebad eingerührt, das auf 100 Teile Wasser 0.8 Teile des Farbstoffs gemäss Beispiel 1, 0.5 Teile Natriumsulfat und 2 Teile Natriumacetat enthält und mit Essigsäure (80%) auf einen pH-Wert von 4,5 gestellt ist. Die Flotte wird im Verlauf von 45 Minuten zum Sieden gebracht und während weiteren 45 bis 70 Minuten bei Kochtemperatur gehalten. Daraufhin wird das Färbegut herausgenommen, mit kaltem Wasser gründlich gespült und getrocknet.

### Applikationsbeispiel 6:

3 Teile des gemäss Beispiel 1 erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Farbstoffe der Formel (1) 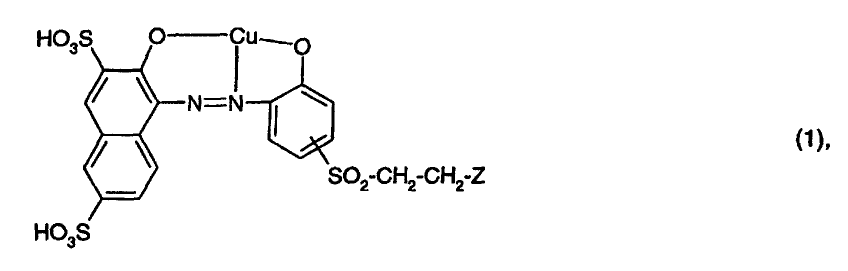 worin
Z C₁₀-C₂₀-Terpenamino oder gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono-C₁-C₁₆-Alkylamino oder N,N-Di-C₁-C₁₆-Alkylamino bedeutet.

2. Farbstoffe gemäss Anspruch 1, **dadurch gekennzeichnet, dass**
Z C₂₀-Diterpenamino, N-Mono-C₈-C₁₄-Alkylamino oder im Alkylteil durch Phenyl, welches seinerseits durch Carboxy substituiert sein kann, Amino, Hydroxy, Sulfo, Sulfato, Carboxy oder Carbamoyl substituiertes und gegebenenfalls durch ein oder zwei Sauerstoffatome oder -NH- Gruppen unterbrochenes N-Mono-C₁-C₆-Alkylamino oder N,N-Di-C₁-C₆-Alkylamino bedeutet.

3. Farbstoffe gemäss einem der Ansprüche 1 und 2, **dadurch gekennzeichnet, dass**
Z C₂₀-Diterpenamino, N-Mono-C₁₁-C₁₄-Alkylamino oder im Alkylteil durch Phenyl, welches seinerseits durch Carboxy substituiert sein kann, Hydroxy, Sulfo, Sulfato, Carboxy oder Carbamoyl substituiertes und gegebenenfalls durch ein oder zwei Sauerstoffatome oder -NH- Gruppen unterbrochenes N-Mono-C₁-C₆-Alkylamino oder N,N-Di-C₁-C₆-Alkylamino bedeutet.

4. Farbstoffe gemäss einem der Ansprüche 1 bis 3, **dadurch gekennzeichnet, dass**
Z im Alkylteil durch Phenyl, Hydroxy, Carboxy oder Carbamoyl substituiertes und gegebenenfalls durch Sauerstoff oder -NH- unterbrochenes N-Mono-C₁-C₄-Alkylamino oder N,N-Di-C₁-C₄-Alkylamino bedeutet.

5. Farbstoffe gemäss einem der Ansprüche 1 bis 4, **dadurch gekennzeichnet, dass** der Farbstoff der Formel (1) ein Farbstoff der Formel (2) 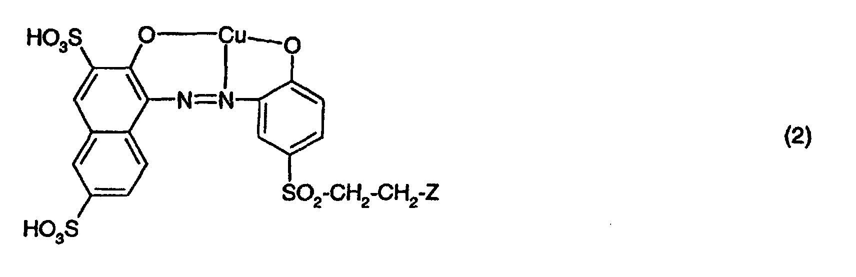 ist, worin
Z die in Anspruch 1 angegebene Bedeutung hat.

6. Verfahren zur Herstellung von Farbstoffen gemäss Anspruch 1, **dadurch gekennzeichnet, dass** man eine Verbindung der Formel (3) 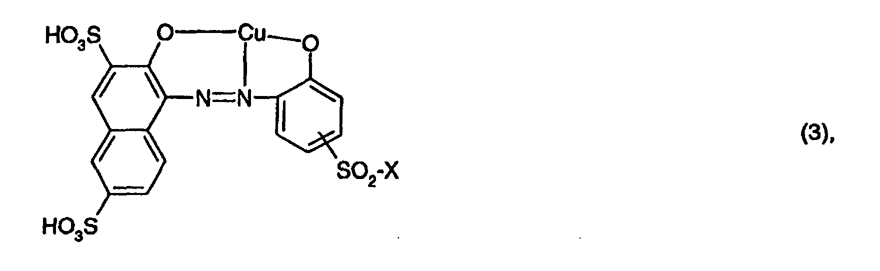 worin X Vinyl oder -CH₂-CH₂-U und U eine alkalisch abspaltbare Gruppe bedeutet, mit mindestens einer äquimolaren Menge einer Verbindung der Formel (4)
Z-H (4)
umsetzt, wobei für Z die in Anspruch 1 angegebene Bedeutung gilt.

7. Tinten, enthaltend
einen Farbstoff der Formel (1) 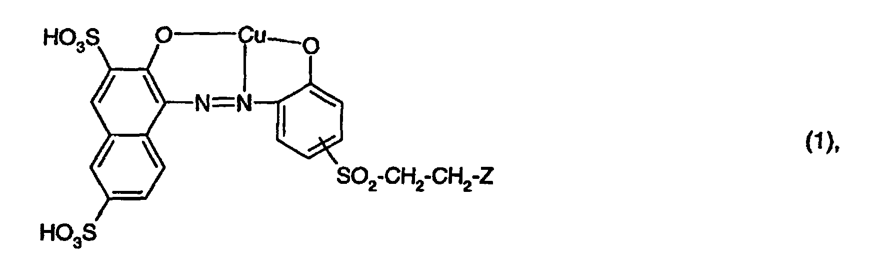 worin
Z C₁₀-C₂₀-Terpenamino oder gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono-C₁-C₁₆-Alkylamino oder N,N-Di-C₁-C₁₆-Alkylamino bedeutet.

8. Tinten gemäss Anspruch 7, **dadurch gekennzeichnet, dass** sie einen Farbstoffgehalt von 1 bis 35 Gew.-% enthalten.

9. Verfahren zum Bedrucken von Papier, textilen Fasermaterialien, Kunststoff- oder Aluminium-Folien nach dem Tintenstrahldruck-Verfahren, **dadurch gekennzeichnet, dass** man eine Tinte gemäss Anspruch 7 verwendet.

10. Verwendung von Farbstoffen gemäss einem der Ansprüche 1 bis 5 bzw. der gemäss Anspruch 6 erhaltenen Farbstoffe zum Färben oder Bedrucken von textilen Fasermaterialien, Holz, Papier, Aluminium-Blechen oder Aluminium-Folien.

11. Farbstoffe der Formel (1) 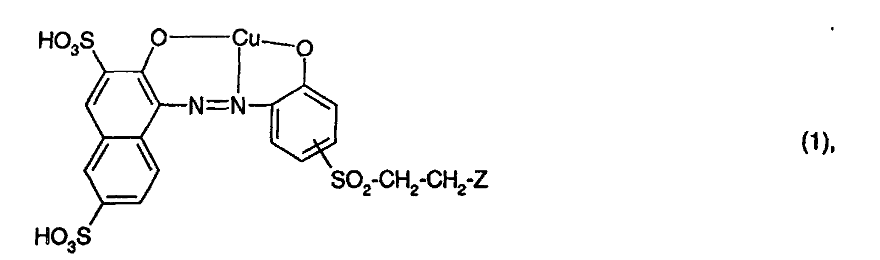 worin
Z eine alkalisch abspaltbare Gruppe, C₁₀-C₂₀-Terpenamino oder gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono-C₁-C₁₆-Alkylamino oder N,N-Di-C₁-C₁₆-Alkylamino bedeutet,
als Salz eines Amins der Formel 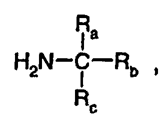 wobei die Summe der Kohlenstoffatome Rₐ + R_{b} + R_{c} 11 bis 14 beträgt.

## Claims

1. A dye of formula (1) 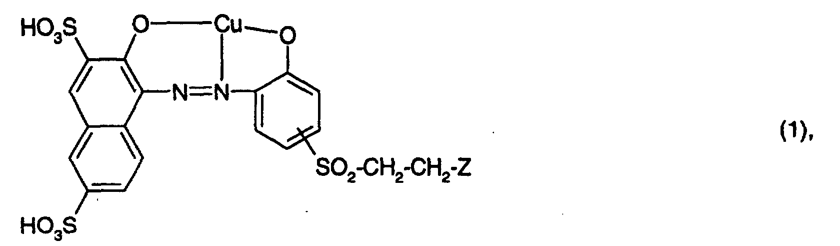 wherein
Z is C₁₀-C₂₀terpeneamino; or N-mono-C₁-C₁₆alkylamino or N,N-di-C₁-C₁₆alkylamino unsubstituted or substituted in the alkyl moiety by phenyl (which may itself be substituted by carboxy, carbamoyl, sulfo or by sulfamoyl), amino, C₂-C₄alkanoylamino, hydroxy, sulfo, sulfato, carboxy, carbamoyl or by sulfamoyl, which further may be interrupted in the alkyl moiety by one, two or three oxygen atoms or -NH- groups.

2. A dye according to claim 1, wherein
Z is C₂₀diterpeneamino; N-mono-C₈-C₁₄alkylamino; or N-mono-C₁-C₆alkylamino or N,N-di-C₁-C₆alkylamino substituted in the alkyl moiety by phenyl (which may itself be substituted by carboxy), amino, hydroxy, sulfo, sulfato, carboxy or by carbamoyl, which further may be interrupted in the alkyl moiety by one or two oxygen atoms or -NH- groups.

3. A dye according to either claim 1 or claim 2, wherein
Z is C₂₀diterpeneamino; N-mono-C₁₁-C₁₄alkylamino; or N-mono-C₁-C₆alkylamino or N,N-di-C₁-C₆alkylamino substituted in the alkyl moiety by phenyl (which may itself be substituted by carboxy), hydroxy, sulfo, sulfato, carboxy or by carbamoyl, which further may be interrupted in the alkyl moiety by one or two oxygen atoms or -NH- groups.

4. A dye according to any one of claims 1 to 3, wherein
Z is N-mono-C₁-C₄alkylamino or N,N-di-C₁-C₄alkylamino substituted in the alkyl moiety by phenyl, hydroxy, carboxy or by carbamoyl, which further may be interrupted in the alkyl moiety by oxygen or -NH-.

5. A dye according to any one of claims 1 to 4, wherein
the dye of formula (1) is a dye of formula (2) 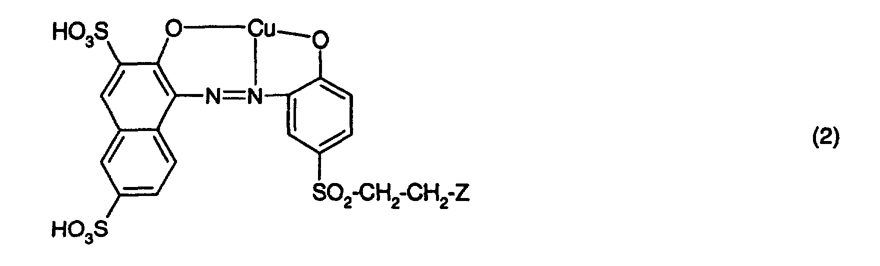 wherein Z is as defined in claim 1.

6. A process for the preparation of a dye according to claim 1, in which process a compound of formula (3) 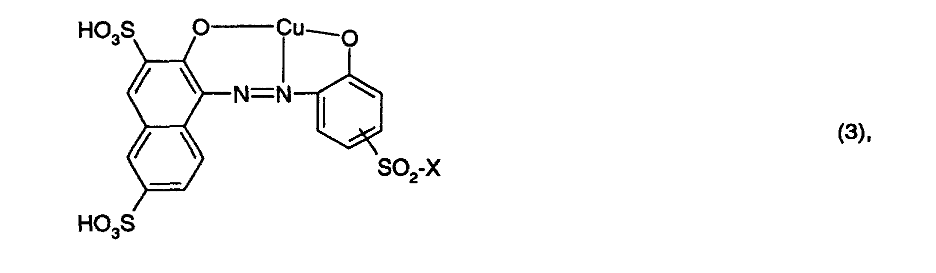 wherein X is vinyl or -CH₂-CH₂-U and U is a group removable under alkaline conditions, is reacted with at least an equimolar amount of a compound of formula (4)
Z-H (4),
Z being as defined in claim 1.

7. An ink comprising
a dye of formula (1) 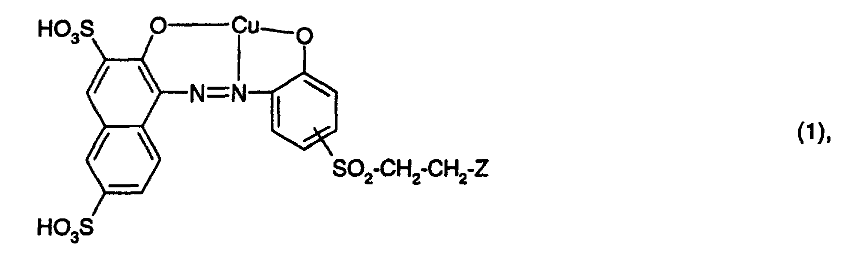 wherein
Z is C₁₀-C₂₀terpeneamino; or N-mono-C₁-C₁₆alkylamino or N,N-di-C₁-C₁₆alkylamino unsubstituted or substituted in the alkyl moiety by phenyl (which may itself be substituted by carboxy, carbamoyl, sulfo or by sulfamoyl), amino, C₂-C₄alkanoylamino, hydroxy, sulfo, sulfato, carboxy, carbamoyl or by sulfamoyl, which further may be interrupted in the alkyl moiety by one, two or three oxygen atoms or -NH- groups.

8. An ink according to claim 7, which has a dye content of from 1 to 35 % by weight.

9. A method of printing paper, textile fibre materials, plastics films or aluminium foils in accordance with the ink-jet printing method, which comprises using an ink according to claim 7.

10. Use of a dye according to any one of claims 1 to 5 or a dye obtained according to claim 6 in the dyeing or printing of textile fibre materials, wood, paper, aluminium sheets or aluminium foils.

11. A dye of formula (1) 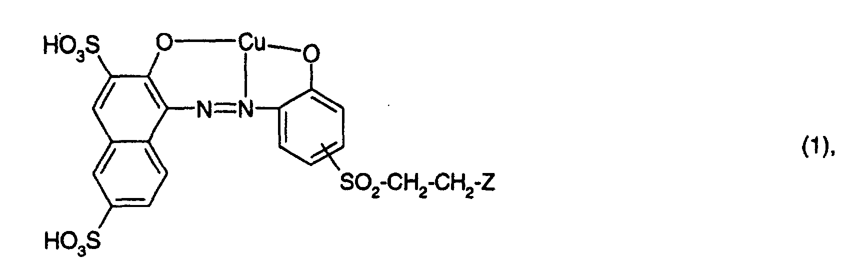 wherein
Z is a group removable under alkaline conditions; C₁₀-C₂₀terpeneamino; or N-mono-C₁-C₁₆alkylamino or N,N-di-C₁-C₁₆alkylamino unsubstituted or substituted in the alkyl moiety by phenyl (which may itself be substituted by carboxy, carbamoyl, sulfo or by sulfamoyl), amino, C₂-C₄alkanoylamino, hydroxy, sulfo, sulfato, carboxy, carbamoyl or by sulfamoyl, which further may be interrupted in the alkyl moiety by one, two or three oxygen atoms or -NH-groups, in the form of a salt of an amine of formula 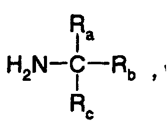 wherein the sum of the carbon atoms Rₐ + R_{b} + R_{c} is from 11 to 14.

## Revendications

1. Colorants de formule (1) 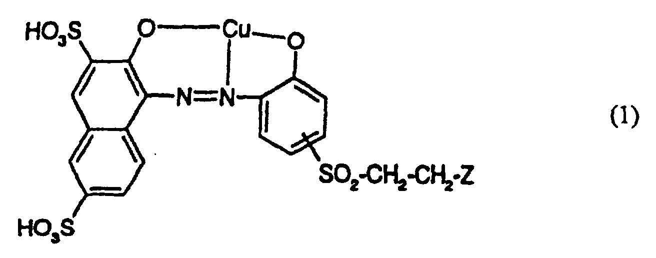 dans laquelle
Z représente un groupe terpène-amino en C₁₀-C₂₀ ou un groupe N-mono(alkyl en C₁-C₁₆)amino ou N,N-di(alkyl en C₁-C₁₆)amino dont la partie alkyle est éventuellement substituée par phényle (qui peut lui-même être substitué par carboxy, carbamoyle, sulfo ou sulfamoyle), amino, alcanoylamino en C₂-C₄, hydroxy, sulfo, sulfato, carboxy, carbamoyle ou sulfamoyle et/ou interrompue par un, deux ou trois atomes d'oxygène ou groupes -NH-.

2. Colorants selon la revendication 1, **caractérisés en ce que** Z représente un reste diterpène-amino en C₂₀, un reste N-mono(alkyl en C₈-C₁₄)amino ou un reste N-mono(alkyl en C₁-C₆)amino ou N,N-di((alkyl en C₁-C₆)amino dont la partie alkyle est substituée par phényle (qui peut lui-même être substitué par carboxy), amino, hydroxy, sulfo, sulfato, carboxy ou carbamoyle et éventuellement interrompue par un ou deux atomes d'oxygène ou groupes-NH-.

3. Colorants selon l'une des revendications 1 et 2, **caractérisés en ce que** Z représente un reste diterpène-amino en C₂₀, un reste N-mono(alkyl en C₁₁-C₁₄)amino ou un reste N-mono(alkyl en C₁-C₆)amino ou N,N-di((alkyl en C₁-C₆)amino dont la partie alkyle est substituée par phényle (qui peut lui-même être substitué par carboxy), hydroxy, sulfo, sulfato, carboxy ou carbamoyle et éventuellement interrompue par un ou deux atomes d'oxygène ou groupes -NH-.

4. Colorants selon l'une des revendications 1 à 3, **caractérisés en ce que** Z représente un reste N-mono(alkyl en C₁-C₄)amino ou N,N-di((alkyl en C₁-C₄)amino dont la partie alkyle est substituée par phényle, hydroxy, carboxy ou carbamoyle et éventuellement interrompue par de l'oxygène ou par-NH-.

5. Colorants selon l'une des revendications 1 à 4, **caractérisés en ce que** le colorant de formule (1) est un colorant de formule (2) 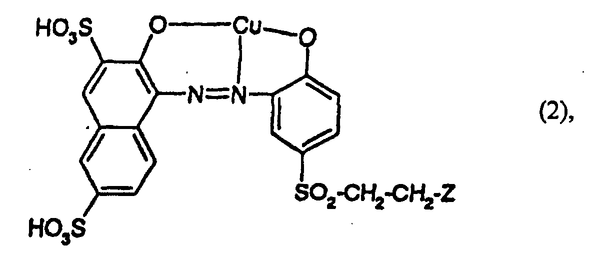 dans laquelle Z a la signification indiquée dans la revendication 1.

6. Procédé de préparation de colorants selon la revendication 1, **caractérisé en ce que** l'on fait réagir un composé de formule (3) 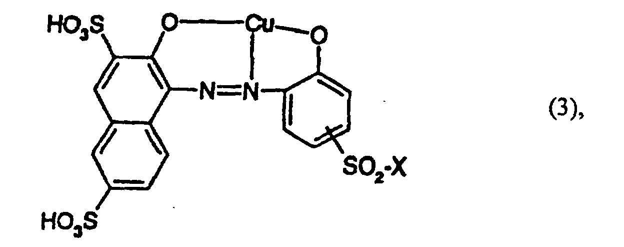 dans laquelle X représente un groupe vinyle ou -CH₂-CH₂-U et U est un groupe dissociable en milieu basique, avec au moins une quantité équimolaire d'un composé de formule (4)
Z-H (4)
Z ayant la signification indiquée dans la revendication 1.

7. Encres contenant un colorant de formule (1) 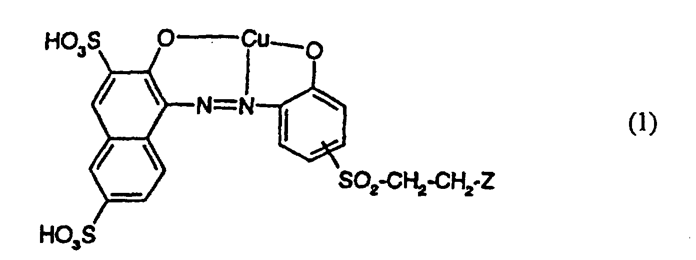 dans laquelle
Z représente un groupe terpène-amino en C₁₀-C₂₀ ou un groupe N-mono(alkyl en C₁-C₁₆)amino ou N,N-di(alkyl en C₁-C₁₆)amino dont la partie alkyle est éventuellement substituée par phényle (qui peut lui-même être substitué par carboxy, carbamoyle, sulfo ou sulfamoyle), amino, alcanoylamino en C₂-C₄, hydroxy, sulfo, sulfato, carboxy, carbamoyle ou sulfamoyle et/ou interrompue par un, deux ou trois atomes d'oxygène ou groupes-NH-.

8. Encres selon la revendication 7, **caractérisées en ce qu'**elles ont une teneur en colorant de 1 à 35 % en masse.

9. Procédé d'impression de papier, de matières fibreuses textiles ou de feuilles de matière plastique ou d'aluminium par le procédé d'impression à jet d'encre, **caractérisé en ce que** l'on utilise une encre selon la revendication 7.

10. Utilisation de colorants selon l'une des revendications 1 à 5 ou des colorants obtenus selon la revendication 6 pour la coloration ou l'impression de matières fibreuses textiles, de bois, de papier, de tôles d'aluminium ou de feuilles d'aluminium.

11. Colorants de formule (1) 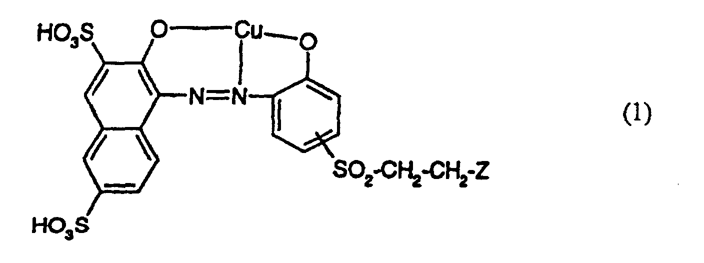 dans laquelle Z est un groupe dissociable en milieu basique, un groupe terpène-amino en C₁₀-C₂₀ ou un groupe N-mono(alkyl en C₁-C₁₆)amino ou N,N-di(alkyl en C₁-C₁₆)amino dont la partie alkyle est éventuellement substituée par phényle (qui peut lui-même être substitué par carboxy, carbamoyle, sulfo ou sulfamoyle), amino, alcanoylamino en C₂-C₄, hydroxy, sulfo, sulfato, carboxy, carbamoyle ou sulfamoyle et/ou interrompue par un, deux ou trois atomes d'oxygène ou groupes-NH-, sous forme de sels d'une amine de formule 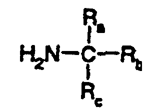 dans laquelle la somme des atomes de carbone de Rₐ + R_{b} + R_{c} est comprise entre 11 et 14.
